# EUROPÄISCHE PATENTSCHRIFT

(11) **EP 0 897 395 B1**
(45) Veröffentlichungstag und Bekanntmachung des Hinweises auf die Patenterteilung: **16.08.2001**
(21) Anmeldenummer: 97922941.6
(22) Anmeldetag: 02.05.1997
(51) Int. Cl.: C08F 8/00, C02F 1/56, D21C 9/18

(54) **BETA-HYDROXYALKYLVINYLAMIN-EINHEITEN ENTHALTENDE POLYMERISATE, VERFAHREN ZU IHRER HERSTELLUNG UND IHRE VERWENDUNG**
POLYMERS CONTAINING BETA-HYDROXY ALKYL VINYL AMINE UNITS, PROCESS FOR THEIR PRODUCTION AND THEIR USE
POLYMERISATS CONTENANT DES UNITES BETA-HYDROXYALKYLVINYLAMINE, PROCEDE PERMETTANT DE LES PREPARER ET LEUR UTILISATION

(30) Priorität: 06.05.1996 DE 19617983
(43) Veröffentlichungstag der Anmeldung: 24.02.1999
(73) Patentinhaber: BASF AKTIENGESELLSCHAFT, 67056 Ludwigshafen (DE)
(72) Erfinder: UTECHT, Jens, D-68809 Neulu heim (DE); NIESSNER, Manfred, D-67105 Schifferstadt (DE); MÖNCH, Dietmar, D-69469 Weinheim (DE); RÜBENACKER, Martin, D-67122 Altrip (DE)
(86) Internationale Anmeldenummer: EP9702251
(87) Internationale Veröffentlichungsnummer: WO9742229

(56) Entgegenhaltungen:
- EP-A- 0 071 050
- EP-A- 0 223 222
- DE-A- 4 339 193
- US-A- 4 778 725

## Beschreibung

Die Erfindung betrifft β-Hydroxyalkylvinylamin-Einheiten enthaltende Polymerisate, die durch Reaktion von Vinylamineinheiten enthaltenden Polymerisaten mit Epoxiden erhältlich sind, ein Verfahren zu ihrer Herstellung und ihre Verwendung als Retentions-, Entwässerungs- und Flockungsmittel sowie als Fixiermittel bei der Herstellung von Papier, als Schutzkolloid zur Herstellung von Alkyldiketendispersionen, als Emulgator zur Herstellung von wäßrigen Füllstoffanschlämmungen und als Korrosionsinhibitor.

Aus der US-A-4 217 214 ist die Herstellung von Polyvinylaminhydrochlorid und seine Verwendung als Flockungsmittel für in Wasser suspendierte Teilchen sowie zur Behandlung von Abwässern und Schlämmen bekannt.

Aus der EP-A-071 050 sind partiell hydrolysierte Polymerisate von N-Vinylformamid bekannt. Sie enthalten 90 bis 10 Mol-% Vinylamin- und 10 bis 90 Mol-% N-Vinylformamideinheiten. Sie werden durch radikalische Polymerisation von N-Vinylformamid und partielle Hydrolyse der POlymerisate in Gegenwart von Säuren oder Basen hergestellt. Die Polymeren werden als Retentions-, Entwässerungs- und Flockungsmittel bei der Herstellung von Papier sowie zur Behandlung von Abwässer und Schlämmen verwendet.

Aus der EP-A-02 16 387 sind Mittel zur Erhöhung der Trockenfestigkeit von Papier bekannt. Es handelt sich dabei um Vinylamin-Einheiten enthaltende wasserlösliche Copolymerisate, die durch Copolymerisieren von N-Vinylformamid mit monoethylenisch ungesättigten Monomeren aus der Gruppe Vinylacetat, Vinylpropionat, C₁- bis C₄-Alkylvinylether, der Ester, Nitrile und Amide von Acrylsäure und Methacrylsäure und N-Vinylpyrrolidon und Abspalten der Formylgruppen aus den Copolymerisaten erhältlich sind. Vorzugsweise werden Copolymerisate aus N-Vinylformamid und Vinylacetat, deren Monomereinheiten zu jeweils 30 bis 100 Mol-% hydrolysiert sind, bei der Papierherstellung verwendet.

Auch die Herstellung modifizierter Polyvinylamine ist aus der Literatur bekannt. So wird beispielsweise die Wasserlöslichkeit von Polyvinylaminen durch Aufpfropfen von Ethylenoxid oder Propylenoxid auf Polyvinylamin verbessert, vgl. Ikemura, Kobunshi Kagaku, 26 (288), 306 - 310 (1969).

Aus der US-A-5 324 787 sind modifizierte Polyvinylamine bekannt, die durch Umsetzung von wenigstens 0,1 Mol-% der Amineinheiten von Polyvinylamin mit einer Glycidyletherverbindung erhältlich sind. Bei der Umsetzung erhält man hydrophobierte Polyvinylamine, die als Retentionsmittel bei der Papierherstellung verwendet werden.

Die Umsetzung von Polyalkylenpolyaminen und Monoepoxiden oder Polyepoxiden zur Herstellung von wasserdispergierbaren Reaktivharzen, die Epoxidgruppen enthalten und in Beschichtungsmaterialien verwendet werden, ist aus der US-A-5 246 984 und der US-A-5 350 784 bekannt.

Der vorliegenden Erfindung liegt die Aufgabe zugrunde, neue Stoffe zur Verfügung zu stellen.

Die Aufgabe wird erfindungsgemäß gelöst mit β-Hydroxyalkylvinylamin-Einheiten enthaltenden Polymerisaten, die erhältlich sind durch Reaktion von Vinylamineinheiten enthaltenden Polymerisaten mit Epoxiden der Formel 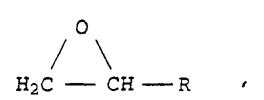 in der R = C₂- bis C₂₈-Alkyl, Phenyl, C₁- bis C₁₈-Alkylphenyl oder C₂- bis C₁₈-Alkenyl bedeutet.

Gegenstand der Erfindung ist außerdem ein Verfahren zur Herstellung der oben beschriebenen β-Hydroxyalkylvinylamin-Einheiten enthaltenden Polymerisate, wobei man mindestens 0,1 Mol-% der NH-Gruppen von Vinylamineinheiten enthaltenden Polymerisaten mit Epoxiden der Formel 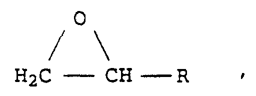 in der R = C₂- bis C₂₈-Alkyl, Phenyl, C₁- bis C₁₈-Alkylphenyl oder C₂- bis C₁₈-Alkenyl bedeutet, bei Temperaturen oberhalb von 70°C umsetzt. Die Umsetzung wird vorzugsweise in wäßriger Lösung bei einem pH-Wert von 8 bis 13 durchgeführt.

Die oben beschriebenen β-Hydroxyalkylvinylamin-Einheiten enthaltenden Polymerisate werden als Retentions-, Entwässerungs- und Flockungsmittel sowie als Fixiermittel bei der Herstellung von Papier, als Schutzkolloid zur Herstellung von Alkyldiketendispersionen oder von Alkenylbernsteinsäureanhydrid-Dispersionen, als Emulgator zur Herstellung von wäßrigen Füllstoffanschlämmungen und als Korrosionsinhibitor verwendet.

Vinylamineinheiten enthaltende Polymerisate sind bekannt, vgl. beispielsweise US-A-4 217 214, EP-A-0 071 050 und EP-A-0 216 387. Diese Polymerisate sind dadurch erhältlich, daß man offenkettige N-Vinylcarbonsäureamide allein oder zusammen mit anderen monoethylenisch ungesättigten Monomeren copolymerisiert und anschließend aus den einpolymerisierten offenkettigen N-Vinylcarbonsäureamid-Einheiten die Formyl- bzw. Alkylcarbonylgruppe durch Einwirkung von Säuren, Basen oder Enzymen unter Bildung von Vinylamineinheiten abspaltet.

Zur Herstellung der Vinylamineinheiten enthaltenden Polymerisate geht man beispielsweise von offenkettigen N-Vinylcarbonsäureamiden der Formel 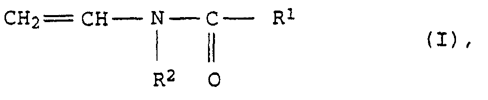 aus, in der R¹ und R² gleich oder verschieden sein können und für Wasserstoff und C₁- bis C₆-Alkyl stehen. Geeignete Monomere sind beispielsweise N-Vinylformamid (R¹=R²=H in Formel I) N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid. Zur Herstellung der Polymerisate können die genannten Monomeren entweder allein, in Mischung untereinander oder zusammen mit anderen monoethylenisch ungesättigten Monomeren polymerisiert werden. Vorzugsweise geht man von Polymerisaten des N-Vinylformamids aus.

Als monoethylenisch ungesättigte Monomere kommen alle mit den offenkettigen Vinylcarbonsäureamiden copolymerisierbaren Verbindungen in Betracht. Beispiele hierfür sind Vinylester von gesättigten Carbonsäuren von 1 bis 6 Kohlenstoffatomen wie Vinylformiat, Vinylacetat, Vinylpropionat und Vinylbutyrat. Weitere geeignete Comonomere sind ethylenisch ungesättigte C₃- bis C₆-Carbonsäuren, beispielsweise Acrylsäure, Methacrylsäure, Maleinsäure, Crotonsäure, Itakonsäure und Vinylessigsäure sowie deren Alkalimetall- und Erdalkalimetallsalze, Ester, Amide und Nitrile, beispielsweise Methylacrylat, Methylmethacrylat, Ethylacrylat und Ethylmethacrylat. Weitere geeignete Carbonsäureester leiten sich von Glykolen oder bzw. Polyalkylenglykolen ab, wobei jeweils nur eine OH-Gruppe verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie Acrylsäuremonoester von Polyalkylenglykolen einer Molmasse von 500 bis 10 000. Weitere geeignete Comonomere sind Ester von ethylenisch ungesättigten Carbonsäuren mit Aminoalkoholen wie beispielsweise Dimethylaminoethylacrylat, Dimethylaminoethylmethacrylat, Diethylaminoethylacrylat, Diethylaminomethylmethacrylat, Dimethylaminopropylacrylat, Dimethylaminopropylmethacrylat, Diethylaminopropylacrylat, Dimethylaminobutylacrylat und Diethylaminobutylacrylat. Die basischen Acrylate können in Form der freien Basen, der Salze mit Mineralsäuren wie Salzsäure, Schwefelsäure oder Salpetersäure, der Salze mit organischen Säuren wie Ameisensäure, Essigsäure, Propionsäure oder Sulfonsäure oder in quaternisierter Form eingesetzt werden. Geeignete Quaternisierungsmittel sind beispielsweise Dimethylsulfat, Diethylsulfat, Methylchlorid, Ethylchlorid oder Benzylchlorid.

Weitere geeignete Comonomere sind Amide ethylenisch ungesättigter Carbonsäuren wie Acrylamid, Methacrylamid sowie N-Alkylmono- und -Diamide von monoethylenisch ungesättigten Carbonsäuren mit Alkylresten von 1 bis 6 C-Atomen, z.B. N-Methyl-acrylamid, N,N-Dimethylacrylamid, N-Methylmethacrylamid, N-Ethylacrylamid, N-Propylacrylamid und tert. Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethylaminopropylacrylamid, Dimethylaminopropylmethacrylamid und Diethylaminopropylmethacrylamid.

Weiterhin sind als Comonomere geeignet N-Vinylpyrrolidon, N-Vinylcaprolactam, Acrylnitril, Methacrylnitril, N-Vinylimidazol sowie substituierte N-Vinylimidazole wie z.B. N-Vinyl-2-methylimidazol, N-Vinyl-4-methylimidazol, N-Vinyl-5-methylimidazol, N-Vinyl-2-ethylimidazol, und N-Vinylimidazoline wie z.B. Vinylimidazolin, N-Vinyl-2-methylimidazolin, und N-Vinyl-2-ethylimidazolin. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat, Methylchlorid oder Benzylchlorid vorgenommen wird.

Außerdem kommen als Comonomere Sulfogruppen enthaltende Monomere wie beispielsweise Vinylsulfonsäure, Allylsulfonsäure, Methallylsulfonsäure, Styrolsulfonsäure, die Alkalimetall- oder Ammoniumsalze dieser Säuren oder Acrylsäure-3-sulfopropylester in Frage.

Die Copolymerisate umfassen auch Terpolymerisate und solche Polymerisate, die zusätzlich mindestens ein weiteres Monomer einpolymerisiert enthalten.

Um Vinylamineinheiten enthaltende Copolymerisate herzustellen, geht man vorzugsweise von Homopolymerisaten des N-Vinylformamids oder von Copolymerisate aus, die
- N-Vinylformamid und
- Vinylformiat, Vinylacetat, Vinylpropionat, Acrylnitril oder N-Vinylpyrrolidon einpolymerisierte enthalten.

Die oben beschriebenen Polymerisate werden durch Einwirkung von Säuren, Basen oder Enzymen in Vinylamineinheiten enthaltende Polymerisate umgewandelt. Hierbei werden aus den einpolymerisierten Monomeren der oben angegebenen Formel I durch Abspaltung der Gruppierung 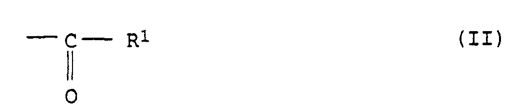 und unter Bildung von Einheiten der Formel 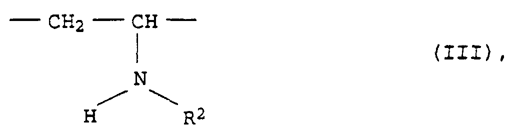 in der R² die in Formel (I) angegebene Bedeutung hat, Vinylamineinheiten enthaltende Polymerisate hergestellt.

Die Copolymerisate enthalten beispielsweise
- 99 bis 1 Mol-% N-Vinylcarbonsäureamide der Formel I und
- 1 bis 99 Mol-% andere, damit copolymerisierbare monoethylenisch ungesättigte Monomere.

Die Homopolymerisate der N-Vinylcarbonsäureamide der Formel I und ihre Copolymerisate können zu 0,1 bis 100, vorzugsweise 10 bis 100 Mol-% hydrolysiert sein. In den meisten Fällen beträgt der Hydrolysegrad der Homo- und Copolymerisate 50 bis 90 Mol-%. Der Hydrolysegrad der Polymerisate ist gleichbedeutend mit dem Gehalt der Polymerisate an Vinylamineinheiten. Bei Copolymerisaten, die Vinylester einpolymerisiert enthalten, kann neben der Hydrolyse der N-Vinylformamid-Einheiten eine Hydrolyse der Estergruppen unter Bildung von Vinylalkoholeinheiten eintreten. Dies ist insbesondere dann der Fall, wenn man die Hydrolyse der Copolymerisate in Gegenwart von Natronlauge durchführt. Einpolymerisiertes Acrylnitril wird ebenfalls bei der Hydrolyse chemisch verändert. Hierbei entstehen beispielsweise Amidgruppen oder Carboxylgruppen.

Die erfindungsgemäßen Polymerisate werden durch Umsetzung von Vinylamineinheiten enthaltenden Polymerisaten mit Epoxiden der Formel 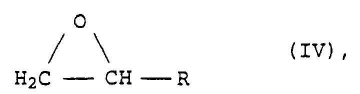 in der R = C₂- bis C₂₈-Alkyl, Phenyl, C₁- bis C₁₈-Alkylphenyl oder C₂- bis C₁₈-Alkenyl bedeutet, hergestellt.

Die oben angegebenen Epoxide sind bekannt. Wenn der Substituent R in der für die Epoxide angegebenen Formel für eine Alkylgruppe steht, so kann es sich bei der Alkylgruppe um eine geradkettige, verzweigte oder cyclische Alkylgruppe handeln. Wenn der Substituent R für ein Alkenyl steht, umfaßt er sowohl geradkettige als auch verzweigte Alkenylgruppen. Vorzugsweise werden Epoxide der obenangegebenen Formel eingesetzt, die 12 bis 20 C-Atome enthalten.

Die oben angegebenen Epoxide werden mit Vinylamineinheiten enthaltenden Polymerisaten bei Temperaturen oberhalb von 70°C umgesetzt. Die Reaktion wird vorzugsweise in einem Lösemittel durchgeführt. Als Lösemittel eignen sich beispielsweise C₁- bis C₄-Alkohole, Tetrahydrofuran, Dioxan, Dimethylformamid und Wasser. Vorzugsweise wird die Reaktion in wäßriger Lösung durchgeführt. Die Temperaturen bei der Umsetzung betragen beispielsweise 70 bis 180°C und liegen vorzugsweise in dem Bereich von 75 bis 100°C. Die Umsetzung wird bevorzugt in wäßriger Lösung bei pH-Werten oberhalb von 7, z.B. in dem Bereich von 8 bis 13, insbesondere 9 bis 11, durchgeführt. Die Konzentration der Reaktionspartner in der wäßrigen Lösung oder in einem anderen in Betracht kommenden Lösemittel beträgt dabei 1 bis 60, vorzugsweise 10 bis 40 Gew.-%. Die Umsetzung ist in dem Temperaturbereich von 80 bis 95°C beispielsweise nach 30 bis 180 min beendet. Falls die Umsetzung in wäßriger Lösung bei Temperaturen oberhalb von 100°C vorgenommen wird, arbeitet man in druckdicht verschlossenen Apparaturen.

Als Reaktionsprodukte erhält man modifizierte Polyvinylamine, die β-Hydroxyalkylvinylamin-Einheiten der Struktur 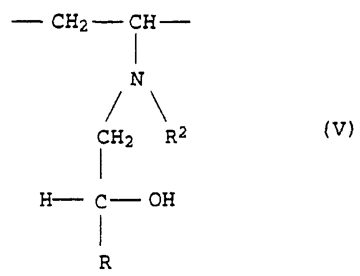 enthalten,
in der
- R =: C₂- bis C₂₈-Alkyl, Phenyl, C₁- bis C₁₈-Alkylphenyl oder C₂- bis C₁₈-Alkenyl und
- R² =: H, C₁- bis C₆-Alkyl
bedeuten. Mindestens 0,1 Mol-% der NH-Gruppen der Vinylamineinheiten enthaltenden Polymerisate sind mit Epoxiden der Formel IV umgesetzt, so daß die erfindungsgemäßen Polymerisate mindestens 0,1 Mol-% an Einheiten der Formel V enthalten. Üblicherweise werden zur Herstellung der erfindungsgemäßen Polymerisate mindestens 10 Mol-% der NH-Gruppen der Vinylamineinheiten enthaltenden Polymerisate mit Epoxiden der Formel IV umgesetzt. Vorzugsweise setzt man 50 bis 90 Mol-% der NH-Gruppen der Vinylamineinheiten enthaltenden Polymerisate mit Epoxiden der Formel IV um. Von den Epoxiden der Formel IV werden diejenigen Epoxide bevorzugt, die 12 bis 20 C-Atome im Molekül enthalten.

Wenn man Polyvinylamine, die durch Hydrolyse von N-Vinylformamid-einheiten enthaltenden Polymerisaten hergestellt werden, bei der Umsetzung mit den Epoxiden der Formel IV einsetzt, erhält man Vinylamineinheiten, die eine primäre Aminogruppe aufweisen. Solche Verbindungen können bei der Umsetzung mit Epoxiden der Formel IV beide Wasserstoffatome der primären Aminogruppe substituieren. Man erhält dann Polymerisate mit Einheiten der Formel 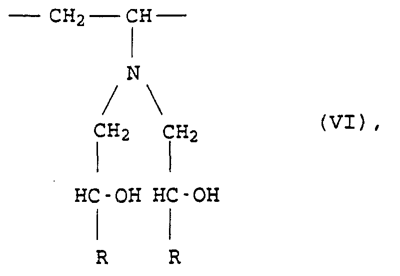 in der
- R =: C₂- bis C₂₈-Alkyl, Phenyl, C₁- bis C₁₈-Alkylphenyl und C₂- bis C₁₈-Alkenyl.

Vorzugsweise steht R in den Formeln V und VI für C₁₀- bis C₁₆-Alkyl.

Die modifizierten Polyvinylamine enthalten Einheiten der Formel VI z.B. in Mengen bis etwa 50 Mol-%, vorzugsweise 5 bis 25 Mol-%.

Wenn man partiell hydrolysierte N-Vinylcarbonsäureamide bei der Umsetzung mit den Epoxiden der Formel IV einsetzt, erhält man Polymerisate, die neben Einheiten der Struktur V und ggf. der Struktur VI Einheiten von nicht hydrolysierten Vinylcarbonsäureamiden enthalten. Wenn man Copolymerisate aus beispielsweise N-Vinylformamid und Vinylformiat, Vinylacetat oder Vinylpropionat einsetzt, erhält man je nach Hydrolysebedingungen Copolymerisate, die Vinylformiat-, Vinylacetat- und Vinylpropionat-Einheiten sowie die entsprechenden Hydrolyseprodukte dieser Einheiten, nämlich Vinylalkohol-Einheiten enthalten. Besonders bevorzugt sind solche Polymerisate, die
- Amineinheiten und Einheiten der Formel V,
- Vinylamineinheiten, N-Vinylformamideinheiten und Einheiten der Formel V,
- Vinylamineinheiten, Vinylalkoholeinheiten und Einheiten der Formel V oder
- Vinylamineinheiten, Vinylpropionateinheiten und ggf. Vinylalkoholeinheiten und Einheiten der Formel V enthalten.

Der Gehalt an Einheiten der Formel V in den erfindungsgemäßen Polymerisaten beträgt mindestens 0,1 Mol-% und liegt üblicherweise in dem Bereich von 30 bis 100, vorzugsweise 50 bis 95 Mol-%. Die erfindungsgemäßen Polymerisate haben Molmassen M_{w} (bestimmt nach der Methode der Lichtstreuung) von 500 bis 50 Millionen, vorzugsweise 10 000 bis 2 Millionen. Die K-Werte der erfindungsgemäßen Polymerisate betragen 10 bis 300, vorzugsweise 30 bis 200. Die K-Werte werden nach H. Fikentscher in 5 %iger wäßriger Kochsalzlösung bei pH 7, einer Temperatur von 25°C und einer Polymerkonzentration von 0,5 Gew.-% bestimmt, vgl. Cellulose-Chemie, Band 13, 58 - 64 und 71 - 74 (1932).

Die erfindungsgemäßen β-Hydroxyalkylvinylamin-Einheiten enthaltende Polymerisate werden als Retentions-, Entwässerungs- und Flockungsmittel bei der Herstellung von Papier verwendet. Sie eignen sich insbesondere als Prozeßhilfsmittel bei der Entwässerung von störstoffhaltigen Papierstoffen. Sie können zur Herstellung aller bekannten Papier-, Pappe- und Kartonqualitäten eingesetzt werden. Die Papiere können aus einer Vielzahl verschiedenartiger Fasermaterialien hergestellt werden, beispielsweise aus Sulfit- oder Sulfatzellstoff in gebleichtem oder in ungebleichtem Zustand, Holzschliff, Druckschliff, CTMP oder Altpapier. Retentions-, Entwässerungs- und Flockungsmittel werden dabei üblicherweise in Mengen von 0,01 bis 0,1 Gew.-%, bezogen auf trockenen Faserstoff eingesetzt.

Die erfindungsgemäßen Polymerisate eignen sich außerdem als Fixiermittel bei der Herstellung von Papier. Eine gute Fixierwirkung ist vor allem dann wichtig, wenn die Papierstoffe größerer Mengen an Störstoffen enthalten, z.B. weisen altpapierhaltige Stoffe störende Mengen an Harzen, polymeren Bindern und anderen störenden Feststoffen auf. Fixiermittel werden üblicherweise in Mengen von 0,01 bis 1 Gew.-%, bezogen auf trockenen Papierstoff, eingesetzt.

Die erfindungsgemäßen β-Hydroxyalkylvinylamin-Einheiten enthaltenden Polymerisate eignen sich außerdem als Schutzkolloid zur Herstellung von Alkyldiketendispersionen oder von Alkenylbernsteinsäureanhydrid-Dispersionen. Sie erlauben beispielsweise die Herstellung von wäßrigen Alkyldiketen-Dispersionen mit einem Alkyldiketengehalt von beispielsweise 15 bis 25 Gew.-%. Die Dispersionen haben eine relativ niedrige Viskosität und sind lagerstabil.

Die erfindungsgemäßen Polymerisate sind außerdem als Emulgator zur Herstellung von wäßrigen Füllstoffanschlämmungen geeignet, die beispielsweise bei der Herstellung von füllstoffhaltigen Papieren eingesetzt werden. Geeignete Füllstoffe sind beispielsweise Clay, Kreide, Titandioxid und Kaolin. Die Mengen an Emulgator zur Herstellung der Füllstoffanschlämmungen beträgt beispielsweise 0,1 bis 2, vorzugsweise 0,5 bis 1,5 Gew.-%, bezogen auf die Anschlämmung. Ein weiteres Anwendungsgebiet für die erfindungsgemäßen Polymerisate ist ihre Wirkung als Korrosionsinhibitor für Metalle.

### Beispiele

### Herstellung der β-Hydroxyalkylvinylamine

In einem mit Kühler, Thermometer und Zulaufvorrichtung versehenen Rührreaktor, der ein Fassungsvermögen von 1 Liter hat, werden eine wäßrige Lösung der in der Tabelle jeweils angegebenen Polymeren bei einem pH-Wert von 11 bis 13 vorgelegt und die in der Tabelle jeweils angegebenen Mengen an Epoxiden jeweils innerhalb von 10 Minuten bei Raumtemperatur zugegeben. Die Reaktionsmischung wird dann auf 90°C erhitzt und 2 bis 3 Stunden bei dieser Temperatur gerührt. Danach ist die Reaktion beendet. Das Reaktionsgemisch wird abgekühlt und das als Lösemittel verwendete Wasser im Vakuum entfernt. Die Charakterisierung der Reaktionsprodukte bezüglich des Gehalts an β-Hydroxyalkylvinylamin-Einheiten erfolgte durch Bestimmung der Amin- und OH-Zahl nach bekannten Methoden. Die Bestimmung des Umsetzungsgrades erfolgte zusätzlich durch Polyelektrolyttitration, vgl. D. Horn, Prog. Colloid & Polymer Sci. 65, 251 (1978). Als Vinylamineinheiten enthaltende Polymerisate wurden folgende Stoffe verwendet:
Polymer 1
   Polyvinylamin, das durch Polymerisieren von N-Vinylformamid und anschließende vollständige Hydrolyse der einpolymerisierten Vinylformamideinheiten zu Vinylamineinheiten hergestellt wurde. Der K-Wert des Polyvinylamins betrug 30.
Polymer 2
   Polyvinylamin, das durch vollständige Hydrolyse von Polyvinylformamid hergestellt wurde und einen K-Wert von 86,6 hatte.
Polymer 3
   Polyvinylamin, das durch vollständige Hydrolyse von Polyvinylformamid herstellt wurde und einen K-Wert von 146 hatte.
Polymer 4
   Teilweise hydrolysiertes Polyvinylformamid, das nach der Lehre der EP-A-0 71 050 hergestellt wurde. Der Hydrolysegrad des Polyvinylformamids betrug 50 Mol-%, der K-Wert 30.
Polymer 5
   Vollständig hydrolysiertes Polymerisat aus 70 % N-Vinylformamid und 30 % Vinylacetat. Das Polymerisat enthält 70 Mol-% Vinylamin- und 30 Mol-% Vinylalkoholeinheiten. Der K-Wert des Polymerisats betrug 90.
Polymerisat 6
   Polymerisat aus 80 Mol-% Vinylamin- und 20 Mol-% Vinylpropionateinheiten, das durch vollständige Hydrolyse der einpolymerisierten Vinylformamidgruppen eines Vinylformamid-Vinylpropionat-Polymerisats hergestellt wurde. Der K-Wert des Polymerisats betrug 60.

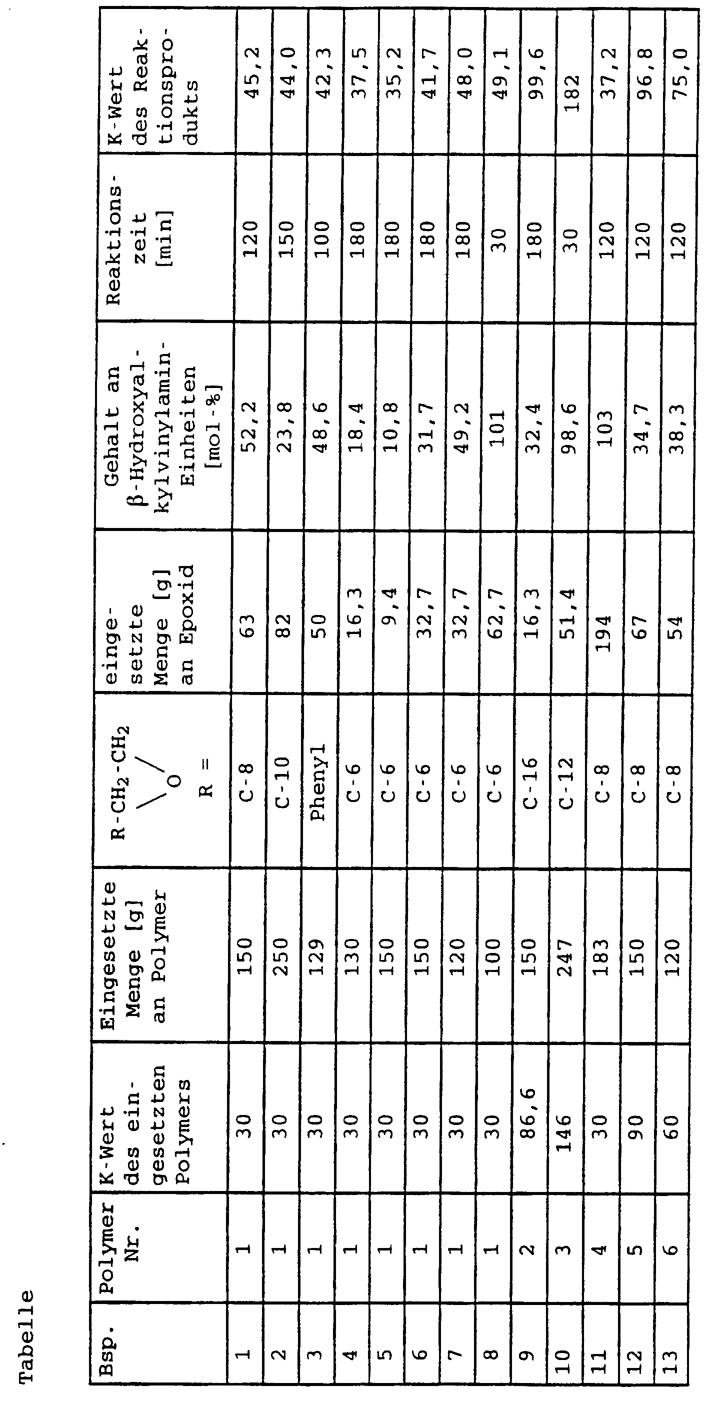

## Patentansprüche

1. β-Hydroxyalkylvinylamin-Einheiten enthaltende Polymerisate, dadurch gekennzeichnet, daß sie erhältlich sind durch Reaktion von Vinylamineinheiten enthaltenden Polymerisaten mit Epoxiden der Formel 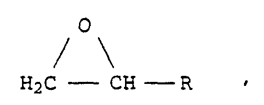 in der R = C₂- bis C₂₈-Alkyl, Phenyl, C₁- bis C₁₈-Alkylphenyl oder C₂- bis C₁₈-Alkenyl bedeutet.

2. β-Hydroxyalkylvinylamin-Einheiten enthaltende Polymerisate nach Anspruch 1, dadurch gekennzeichnet, daß mindestens 0,1 Mol-% der NH-Gruppen der Vinylamineinheiten enthaltenden Polymerisate mit Epoxiden umgesetzt ist.

3. β-Hydroxyalkylvinylamin-Einheiten enthaltende Polymerisate nach Anspruch 1, dadurch gekennzeichnet, daß mindestens 10 Mol-% der NH-Gruppen der Vinylamineinheiten enthaltenden Polymerisate mit Epoxiden umgesetzt sind.

4. β-Hydroxyalkylvinylamin-Einheiten enthaltende Polymerisate nach Anspruch 1, dadurch gekennzeichnet, daß 50 bis 95 Mol-% der NH-Gruppen der Vinylamineinheien enthaltenden Polymerisate mit Epoxiden umgesetzt sind.

5. β-Hydroxyalkylvinylamin-Einheiten enthaltende Polymerisate nach einem der Ansprüche 1 bis 4, dadurch gekennzeichnet, daß die Epoxide 12 bis 20 C-Atome im Molekül enthalten.

6. β-Hydroxyalkylvinylamin-Einheiten enthaltende Polymerisate nach Anspruch 1, dadurch gekennzeichnet, daß die bei der Reaktion eingesetzten Vinylamineinheiten enthaltenden Polymerisate einen K-Wert von mindestens 10 haben (bestimmt nach H. Fikentscher in 5 gew.-%iger wäßriger Kochsalzlösung bei 25°C) und einer Polymerkonzentration von 0,5 Gew.-%.

7. Verfahren zur Herstellung der β-Hydroxyalkylvinylamin-Einheiten enthaltenden Polymerisate nach den Ansprüchen 1 bis 6, dadurch gekennzeichnet, daß man mindestens 0,1 Mol-% der NH-Gruppen von Vinylamineinheiten enthaltenden Polymerisaten mit Epoxiden der Formel 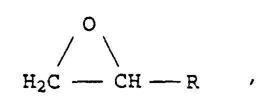 in der R = C₂- bis C₂₈-Alkyl, Phenyl, C₁- bis C₁₈-Alkylphenyl oder C₂- bis C₁₈-Alkenyl bedeutet,
bei Temperaturen oberhalb von 70°C umsetzt.

8. Verfahren nach Anspruch 7, dadurch gekennzeichnet, daß man die Umsetzung in wäßriger Lösung bei einem pH-Wert von 8 bis 13 durchführt.

9. Verfahren nach Anspruch 7, dadurch gekennzeichnet, daß man Epoxide einsetzt, die 12 bis 20 C-Atome im Molekül enthalten.

10. Verwendung der β-Hydroxyalkylvinylamin-Einheiten enthaltenden Polymerisate nach den Ansprüchen 1 bis 6 als Retentions-, Entwässerungs- und Flockungsmittel sowie als Fixiermittel bei der Herstellung von Papier, als Schutzkolloid zur Herstellung von Alkyldiketendispersionen oder von Alkenylbernsteinsäureanhydrid-Dispersionen, als Emulgator zur Herstellung von wäßrigen Füllstoffanschlämmungen und als Korrosionsinhibitor.

## Revendications

1. Polymères contenant des motifs β-hydroxyalkylvinylamine, caractérisés en ce que l'on peut les obtenir par réaction de polymères contenant des motifs vinylamine avec des époxydes de formule 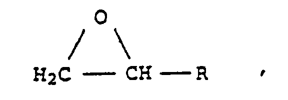 dans laquelle R représente un groupe alkyle en C₂ à C₂₈, phényle, alkylphényle en C₁ à C₁₈, ou alcényle en C₂ à C₁₈.

2. Polymères contenant des motifs β-hydroxyalkylvinylamine selon la revendication 1, caractérisés en ce qu'au moins 0,1% en moles des groupes NH des polymères contenant les motifs vinylamine ont réagi avec les époxydes.

3. Polymères contenant des motifs β-hydroxyalkylvinylamine, selon la revendication 1, caractérisés en ce qu'au moins 10% en moles des groupes NH des polymères contenant les motifs vinylamine ont réagi avec les époxydes.

4. Polymères contenant des motifs β-hydroxyalkylvinylamine, selon la revendication 1, caractérisés en ce que 50 à 95% en moles des groupes NH des polymères contenant les motifs vinylamine ont réagi avec les époxydes.

5. Polymères contenant des motifs β-hydroxyalkylvinylamine, selon l'une quelconque des revendications 1 à 4, caractérisés en ce que les époxydes contiennent 12 à 20 atomes de C dans la molécule.

6. Polymères contenant des motifs β-hydroxyalkylvinylamines, selon la revendication 1, caractérisés en ce que les polymères contenant des motifs vinylamines et mis en oeuvre dans la réaction possèdent une valeur K d'au moins 10 (déterminée, d'après H. Fikentscher, dans une solution aqueuse de sel de cuisine à 5% en poids à 25°C) et à une concentration en polymère de 0,5% en poids.

7. Procédé de préparation de polymères contenant des motifs β-hydroxyalkylvinylamines, selon les revendications 1 à 6, caractérisé en ce que l'on met au moins 0,1% en mole des groupes NH des polymères contenant des motifs vinylamines à réagir avec des époxydes de formule 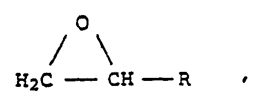 dans laquelle R représente un groupe alkyle en C₂ à C₂₈, phényle, alkylphényle en C₁ à C₁₈ ou alcényle en C₂ à C₁₈, à des températures supérieures à 70°C.

8. Procédé selon la revendication 7, caractérisé en ce que l'on réalise la réaction en solution aqueuse à une valeur de pH de 8 à 13.

9. Procédé selon la revendication 7, caractérisé en ce que l'on met en oeuvre des époxydes qui contiennent 12 à 20 atomes de C dans la molécule.

10. Utilisation des polymères contenant des motifs β-hydroxyalkylvinylamines, selon les revendications 1 à 6, en tant qu'agents de rétention, de déshydratation et de floculation, ainsi qu'en tant qu'agents de fixation dans la fabrication du papier, en tant que colloïdes protecteurs pour la préparation de dispersions alkyldicétènes ou de dispersions d'anhydrides alcénylsucciniques, en tant qu'émulsifiants pour la préparation de suspensions aqueuses de charge et en tant qu'agents anti-corrosion.

## Claims

1. A polymer containing β-hydroxyalkylvinylamine units, which is obtainable by reacting a polymer containing vinylamine units with epoxides of the formula 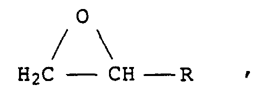 where R = C₂-C₂₈-alkyl, phenyl, C₁-C₁₈-alkylphenyl or C₂-C₁₈-alkenyl.

2. A polymer containing β-hydroxyalkylvinylamine units as claimed in claim 1, wherein at least 0.1 mol% of the NH groups of the polymer containing vinylamine units is reacted with epoxides.

3. A polymer containing β-hydroxyalkylvinylamine units as claimed in claim 1, wherein at least 10 mol% of the NH groups of the polymer containing vinylamine units are reacted with epoxides.

4. A polymer containing β-hydroxyalkylvinylamine units as claimed in claim 1, wherein from 50 to 95 mol% of the NH groups of the polymer containing the vinylamine units are reacted with epoxides.

5. A polymer containing β-hydroxyalkylvinylamine units as claimed in one of claims 1 to 4, wherein the epoxides contain from 12 to 20 carbons per molecule.

6. A polymer containing β-hydroxyalkylvinylamine units as claimed in claim 1, wherein the polymer containing vinylamine units used in the reaction has a K value of at least 10 (determined according to H. Fikentscher in 5 % strength by weight aqueous sodium chloride solution at 25°C) and a polymer concentration of 0.5 % by weight.

7. A process for preparing the polymer containing β-hydroxyalkylvinylamine units as claimed in any of claims 1 to 6, which comprises reacting at least 0.1 mol% of the NH groups of a polymer containing vinylamine units with epoxides of the formula 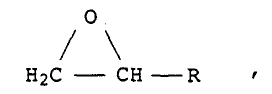 where R = C₂-C₂₈-alkyl, phenyl, C₁-C₁₈-alkylphenyl or C₂-C₁₈-alkenyl,
at above 70°C.

8. A process as claimed in claim 7, wherein the reaction is carried out in aqueous solution at pH 8-13.

9. A process as claimed in claim 7, wherein epoxides are used which contain from 12 to 20 carbons per molecule.

10. The use of a polymer containing β-hydroxyalkylvinylamine units as claimed in any of claims 1 to 6 as retention and drainage aids and flocculants and as fixatives in papermaking, as protective colloid for producing alkyldiketene dispersions or alkenylsuccinic anhydride dispersions, as emulsifier for producing aqueous filler suspensions and as corrosion inhibitor.
